Europäisches Patentamt

European Patent Office

Office européen des brevets

(11) Veröffentlichungsnummer: **0 325 127**
**A1**

(12) **EUROPÄISCHE PATENTANMELDUNG**

(21) Anmeldenummer: 89100240.4

(51) Int. Cl.4: **C04B 33/28 , C04B 35/10**

(22) Anmeldetag: 07.01.89

(30) Priorität: 19.01.88 DE 3801326

(43) Veröffentlichungstag der Anmeldung:
26.07.89 Patentblatt 89/30

(84) Benannte Vertragsstaaten:
CH DE FR GB LI SE

(71) Anmelder: **Asea Brown Boveri
Aktiengesellschaft
Kallstadter Strasse 1
D-6800 Mannheim 31(DE)**

(72) Erfinder: **Nienburg, Hans, Dr.
Burgstrasse 40
D-6900 Heidelberg(DE)**
Erfinder: **Harbach, Friedrich, Dr.
Bürgerstrasse 2
D-6900 Heidelberg(DE)**
Erfinder: **Stein, Peter
Freiheitsplatz 12
D-6800 Mannheim 23(DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1(DE)**

(54) Verfahren zur Herstellung einer Keramiksuspension.

(57) Der Erfindung liegt die Aufgabe zugrunde, ein Verfahren zur Herstellung einer Keramiksuspension unter Verwendung von agglomeriertem Alpha-Aluminiumoxidpulver anzugeben.

Diese Aufgabe wird gelöst durch Verwendung von Wasser oder einem organischen Lösungsmittel als Dispersionsmittel, worin ionische oder polymere Reagenzien als Dispergiermittel gelöst werden.

Mit dem erfindungsgemäßen Verfahren lassen sich feine und stabile Alpha-$Al_2O_3$-Suspensionen herstellen, die direkt zur Herstellung von homogenen keramischen Formteilen durch nasse Formgebungsverfahren eingesetzt werden können.

EP 0 325 127 A1

## Verfahren zur Herstellung einer Keramiksuspension

Die Erfindung bezieht sich auf ein Verfahren zur Herstellung einer Keramiksuspension gemäß dem Oberbegriff des Anspruchs 1 sowie auf eine Verwendung der hergestellten Keramiksuspension.

Bei der Herstellung von Formkörpern aus Keramik geht man von Keramikpulver aus. Für die Herstellung von Formkörpern aus solchem Keramikpulver sind mehrere unterschiedliche Formgebungsverfahren bekannt, wie z.B. Trockenpressen und Schlickerguß. Im Falle des Trockenpressens muß aus verarbeitungstechnischen Gründen von granulierten Pulvern ausgegangen werden und im Falle des klassischen Schlickergusses werden relativ grobkörnige oder agglomerierte Pulver eingesetzt. Diese Ausgangsbedingungen führen zu größeren chemischen und mechanischen Inhomogenitäten in der Keramik, die dann die Festigkeit und sonstigen Eigenschaften des keramischen Bauteils negativ beeinflussen können. Zur Vermeidung dieser Nachteile werden bei sogenannten Hochleistungskeramiken nasse Formgebungsverfahren bevorzugt, beispielsweise durch elektrophoretische Abscheidung, wobei eine Suspension aus feinen Keramikteilchen benutzt wird. Solche Verfahren sind aus der DE-OS 27 52 003 bekannt. Aber auch dabei besteht das Problem, daß das eingesetzte Pulver praktisch immer Agglomerate der primär hergestellten Pulverteilchen enthält. Dieses Problem der Agglomerat-Bildung und Auswirkungen der Agglomerate bei der Verarbeitung von Keramikpulver sind beispielsweise in Haloran, J.W., "Agglomerates and Agglomeration in Ceramic Processing" in Hench, L.L. and Ulrich D.R. (ed.), Ultrastructure Processing of Ceramics, Glasses, and Composites, John Wiley & Sons, New York etc., 1984, page 404-417, beschrieben. Außerdem ist dieser Druckschrift zu entnehmen, daß unterschiedliche Mechanismen zur Bildung der Agglomerate führen und unterschiedliche Kräfte die primären Pulverteilchen zusammenhalten.

Bei der Herstellung von Suspensionen für die Herstellung von keramischen Formkörpern ist man bestrebt, eine Auflösung der Pulveragglomerate in einem Lösungsmittel zu erreichen, also die Bindungskräfte zu überwinden. Je nach Art der Keramikteilchen sind unterschiedliche Lösungsmittel geeignet. In M.V. Parish, R.R. Garcia, H.K. Bowen, "Dispersions of oxide powders in organic liquids", J. Mat. Sci. 20, page 996-1008, (1985) wird über Untersuchungsergebnisse berichtet, wobei die Eignung von 19 verschiedenen organischen Flüssigkeiten und von Wasser zur Dispergierung von 13 verschiedenen Metalloxiden untersucht wurde. Zu den betrachteten Metalloxiden gehörte jedoch kein Aluminiumoxid.

Formkörper aus oder auf der Basis von Aluminiumoxid werden beispielsweise zur Herstellung von Hochleistungsbatterien zur Speicherung elektrischer Energie benötigt.

Und zwar werden dort sowohl Festelektrolyt-Körper aus Beta-Aluminiumoxid benötigt, als auch z.B. rohr- oder plattenförmige Teile aus Alpha-Aluminiumoxid.

Der vorliegenden Erfindung liegt die Aufgabe zugrunde, ein Verfahren zur Herstellung einer Keramiksuspension mit Alpha-Aluminiumoxidteilchen anzugeben.

Die Aufgabe wird bei einem Verfahren nach dem Oberbegriff des Anspruchs 1 durch dessen kennzeichnende Merkmale gelöst.

Vorteilhafte Ausgestaltungen sind in Unteransprüchen angegeben. In weiteren Ansprüchen ist eine Verwendung der nach dem erfindungsgemäßen Verfahren hergestellten Suspension angegeben.

Mit der Erfindung wird eine Kombination von Wasser oder organischen Lösungsmitteln als Dispersionsmittel und ionische oder polymere Reagenzien als Dispergiermittel, also als Zusätze zum eigentlichen Lösungsmittel vorgeschlagen. Die Auswahl einer der in den Unteransprüchen angegebenen Verfahrens-Varianten hängt von jeweiligen Bedingungen ab, die sich aus einzelnen Komponenten der Suspension oder aus Anforderungen der Einrichtungen zur weiteren Verarbeitung der Suspension ergeben können. Man wird z.B. mit Säuren als Dispergiermitteln arbeiten, wenn als Zusätze vorgesehene Binder sich nur in Säure lösen. Wenn die vorgesehene Einrichtung zur Formgebung gegen alkalische Stoffe empfindlich ist, wird man zur Vermeidung von Korrosion entsprechend andere Dispergiermittel verwenden. Eine anderes Beispiel wäre eine beabsichtigte elektrophoretische Abscheidung, wofür eine Suspension mit Wasser wegen der eintretenden Wasserzersetzung ungeeignet wäre, und deshalb Alkohole als Lösungsmittel vorzuziehen wären.

Es versteht sich, daß in diesem Zusammenhang mit Lösen immer Dispergieren und nicht Dissoziieren gemeint ist. Das eingesetzte Pulveragglomerat läßt sich also in dem Lösungsmittel nur bis zur Korngröße der primären Pulverteilchen dispergieren.

Die vorgeschlagenen Kombinationen von Dispersionsmittel und Dispergiermittel haben die Haupt-Aufgabe Pulveragglomerate aufzulösen und die Keramikteilchen zu stabilisieren, wodurch eine Verarbeitung der Suspension auch noch nach Tagen möglich ist. Außerdem haben die polymeren Dispergiermittel die Eigenschaft als Binder zu wirken, wodurch die Festigkeit des keramischen Grünlings erhöht wird. Um die Wirkung als Binder zu steigern, kann der Anteil eines polymeren Dispergiermittels bis auf etwa 5 Gew.-% (bezogen auf Alpha-Aluminiumoxid) erhöht werden. Schließlich läßt sich die hergestellte Suspension vorteilhaft verwenden zur direkten nassen Formgebung, wobei besonders feinkörnige und homogene Formkörper erzielbar sind.

Die Erfindung wird anhand eines nachstehenden Beispiels näher erläutert. In diesem Beispiel wird als Dispersionsmittel ein Alkohol, nämlich Ethanol, verwendet. Darin wird als Dispergiermittel Polyacrylsäure gelöst, wobei die Menge der Polyacrylsäure zu etwa 1,5 Gew.-% bezogen auf Alpha-$Al_2O_3$ bemessen wird. In diese Lösung wird unter Rühren portionsweise Alpha-$Al_2O_3$-Pulver mit einer mittleren Korngröße von 0,5 $\mu$m Durchmesser zugegeben. Die zugegebene Pulvermenge beträgt etwa 60 Gew.-% bezogen auf den Gesamtansatz. Dieser Ansatz wird anschließend unter Rühren und Eiskühlung etwa 15 Minuten lang mit einem Ultraschall-Rüssel beschallt. Dabei entsteht eine weitgehend agglomeratfreie, niedrig-viskose Suspension, die über mehrere Tage stabil ist. Eine solche Suspension läßt sich vorteilhaft z.B. für eine Formgebung durch elektrophoretische Abscheidung aus der Suspension verwenden.

## Ansprüche

1. Verfahren zur Herstellung einer Keramiksuspension unter Verwendung von Alpha-$Al_2O_3$-Pulver, das agglomerierte Pulverteilchen enthält, da<u>durch gekennzeichnet, daß</u>
- in Wasser oder einem organischen Lösungsmittel als Dispersionsmittel ionische oder polymere Reagenzien als zusätzliche Dispergiermittel gelöst werden und
- dazu Alpha-$Al_2O_3$-Pulver unter Rühren zugegeben wird.

2. Verfahren nach Anspruch 1, dadurch gekennzeichnet, daß als Dispersionsmittel Wasser und als Dispergiermittel 0,1 bis 2 Gew.-% (bezogen auf Alpha-$Al_2O_3$) Basen (z.B. $NH_4OH$; organische Amine), Mineralsäuren (z.B. HCL; $HNO_3$) oder Carbonsäuren (z.B. Essigsäure; p-Hydroxybenzoesäure) eingesetzt werden.

3. Verfahren nach Anspruch 1, dadurch gekennzeichnet, daß als Dispersionsmittel Wasser und als Dispergiermittel 0,1 bis 5 Gew.-% (bezogen auf Alpha-$Al_2O_3$) oligomere oder polymere Elektrolyte (z.B. 3, 6, 9-Trioxaundecandisäure; Polyglykoldisäure; Naphthalinsulfonsäurekondensat; Maleinsäurecopolymeres; Polyacrylsäure; partiell veresterte Polyacrylsäure; sowie die Ammoniumsalze dieser Verbindungen) eingesetzt werden.

4. Verfahren nach Anspruch 1, dadurch gekennzeichnet, daß als Dispersionsmittel Alkohole (z.B. Methanol; Ethanol; Propanol) und als Dispergiermittel 0,1 bis 2 Gew.-% (bezogen auf Alpha-$Al_2O_3$) organische Basen (z.B. Triethylamin; Tetrabutylammoniumhydroxid) oder Carbonsäuren (z.B. Essigsäure; p-Hydroxybenzoesäure; 3, 6, 9-Trioxaundecadisäure) eingesetzt werden.

5. Verfahren nach Anspruch 1, dadurch gekennzeichnet, daß als Dispersionsmittel Alkohole (z.B. Methanol; Ethanol; Propanol) und als Dispergiermittel 0,1 bis 5 Gew.-% (bezogen auf Alpha-$Al_2O_3$) Polymere (z.B. Polyvinylpyrrolidon; Nitrocellulose; Polyacrylsäure; partiell veresterte Polyacrylsäure; Polyvinylbtyral) eingesetzt werden.

6. Verfahren nach einem der Ansprüche 1 bis 5, dadurch gekennzeichnet, daß 30 bis 90 Gew.-% (bezogen auf den Gesamtansatz) Alpha-$Al_2O_3$-Pulver mit einer mittleren Korngröße unter 1$\mu$m eingesetzt werden.

7. Verfahren nach einem der Ansprüche 1 bis 6, dadurch gekennzeichnet, daß fraktionierte Alpha-$Al_2O_3$-Pulver mit einer Korngrößen-Verteilungsbreite von 0,1 bis 0,6$\mu$m, wobei 80% des Pulvers in dieser Intervallbreite liegen sollen, eingesetzt werden.

8. Verfahren nach einem der Ansprüche 1 bis 7, dadurch gekennzeichnet, daß das Alpha-$Al_2O_3$-Pulver zusätzlich mit Hilfe von Ultraschall dispergiert wird.

9. Verwendung der nach einem der Verfahren gemäß einem der Ansprüche 1 bis 8 hergestellten Keramiksuspension zur Herstellung von keramischen Formteilen durch nasse Formgebungsverfahren.

10. Verwendung der Keramiksuspension gemäß Anspruch 9, dadurch gekennzeichnet, daß die Formgebung durch elektropheretische Abscheidung erfolgt.

Europäisches
Patentamt

**EUROPÄISCHER RECHERCHENBERICHT**

Nummer der Anmeldung

| Kategorie | EINSCHLÄGIGE DOKUMENTE Kennzeichnung des Dokuments mit Angabe, soweit erforderlich, der maßgeblichen Teile | Betrifft Anspruch | EP 89100240.4 KLASSIFIKATION DER ANMELDUNG (Int. Cl.4) |
|---|---|---|---|
| X | DE - B - 1 070 984 (KABEL-ES MÜANYAGGYAR)<br><br>* Spalte 3, Zeilen 7-39; Beispiele *<br><br>-- | 1-7,9 | C 04 B 33/28<br>C 04 B 35/10 |
| X | DE - B - 1 067 354 (G. J. LELKES)<br><br>* Spalte 2, Zeilen 18-42; Ansprüche *<br><br>-- | 1-7,9 | |
| Y | DE - B - 1 054 367 (FARBWERKE HOECHST AKTIENGESELLSCHAFT)<br><br>* Gesamt *<br><br>---- | 1-5 | |
| | | | RECHERCHIERTE SACHGEBIETE (Int. Cl.4)<br><br>C 04 B |

Der vorliegende Recherchenbericht wurde für alle Patentansprüche erstellt.

| Recherchenort | Abschlußdatum der Recherche | Prüfer |
|---|---|---|
| WIEN | 05-04-1989 | BECK |